# NEUE EUROPÄISCHE PATENTSCHRIFT

(11) **EP 1 568 544 B2**
(45) Veröffentlichungstag und Bekanntmachung des Hinweises auf die Entscheidung über den Einspruch: **22.05.2013**
(45) Hinweis auf die Patenterteilung: 24.01.2007
(21) Anmeldenummer: 04029547.9
(22) Anmeldetag: 14.12.2004
(51) Int. Cl.: B60R 21/16

(54) **Seitenaufprall-Rückhaltevorrichtung**
Side impact restraint device
Système de retenue à l'égard d' impacts latéraux

(30) Priorität: 25.02.2004 DE 102004009013
(43) Veröffentlichungstag der Anmeldung: 31.08.2005
(73) Patentinhaber: TRW Automotive GmbH, 73553 Alfdorf (DE)
(72) Erfinder: Hofmann, Sven, 73525 Schwaebisch Gmund (DE); Acker, Dominique, 74417 Gschwend (DE)
(74) Vertreter: Prinz & Partner

(56) Entgegenhaltungen:
- EP-A1- 0 670 247
- EP-B1- 0 734 918
- EP-B1- 1 044 855
- WO-A1-2005/070729
- WO-A1-2006/050757
- DE-A1- 10 020 729
- DE-A1- 10 032 791
- DE-A1- 19 633 883
- DE-U1- 20 000 144
- DE-U1- 20 207 388
- DE-U1- 29 804 005
- DE-U1- 29 906 477
- DE-U1-202006 017 996
- FR-A- 2 805 505
- FR-A1- 2 805 505
- US-A- 3 511 519
- US-A- 5 556 128
- US-A1- 2001 017 458
- US-A1- 2002 047 253
- US-A1- 2002 096 869
- US-A1- 2003 178 831
- US-A1- 2004 012 179
- FRANZ J ET AL: 'Numerical and experimental simulation of different load cases in side impacts' THE FOURTEENTH INTERNATIONAL TECHNICAL CONFERENCE ON ENHANCED SAFETY OF VEHICLES Bd. 2, 23 Mai 1994 - 26 Mai 1994, Seiten 1091 - 1096
- US DEPARTMENT OF TRANSPORTATION: 'laboratory test procedure for fmvss 202 - head restraints' Bd. TP-202-8, 12 Oktober 1989,
- GNS SYSTEMS: 'Positionierung von FE-Dummy und FE-Sitz mit Generator2' NEWSLETTER VON GNS UND GNS SYSTEMS Bd. 1/8, Januar 2006,
- 'H-point' WIKIPEDIA Gefunden im Internet: <URL:http://en.wikipedia.org/wiki/H-point>

## Beschreibung

Die Erfindung betrifft eine Seitenaufprall-Rückhaltevorrichtung zum Schutz eines auf einem Fahrzeugsitz sitzenden Insassen in einem Kraftfahrzeug, mit einem Gassack, der sich zwischen einer Seitenstruktur des Fahrzeugs und dem Insassen entfaltet.

Aus der DE 197 14 266 A1 ist eine solche Seitenaufprallrückhaltevorrichtung bekannt, bei der ein Gassack mit zwei Abschnitten unterschiedlicher Breite in den Spalt zwischen Seitenstruktur und Insassen aufgeblasen wird. Der schmälere obere Abschnitt des Gassacks erstreckt sich auf Höhe des Brustbereichs, der breitere untere Abschnitt auf Höhe de Beckenbereichs.

Die DE 100 20 729 A1 zeigt einen Gassack, der sich vorzugsweise aus einem Fahrzeugsitz heraus entfaltet und Abströmöffnungen aufweist, wodurch bei einem Aufprall ein kontrolliertes Gasausblasen möglich ist.

Eine weitere Seitenaufprall-Rückhaltevorrichtung ist aus der US 2001/017458 A1 bekannt. Eine Notfall-Üffnungseinrichtung mit einer auch nach dem Aufblasen des Gassacks verschlossenen Abströmöffnung dient dazu, nach einem Unfall das Gas aus dem Gassack auszulassen, um den Zugang zum Fahrzeuginnenraum für Hilfskräfte zu ermöglichen. Hierzu weist der Gassack einen von Hand zu entfernenden Verschluß für die Abströmöffnung auf.

Aus der EP 1 044 855 B1 ist eine Rückhalte vorrichtung mit den Merkmalen des Oberbegriffs des Anspruchs 1 bekannt. Der bei diesen Vorrichtung verwendete Gassack soll auch in einer Seitenaufprall-Rückhaltevorrichtung einsetzten sein, beispielsweise wenn er in einem Fahrzeugsitz untergebracht ist.

Aufgabe der Erfindung ist es, eine Seitenaufprallrückhaltevorrichtung mit einem Gassack zu schaffen, der sich an den Körperbau des Insassen anpaßt und bei der der Insasse vor austretenden Gas geschützt ist.

Zur Lösung dieser Aufgabe wird eine Seitenaufprallrückhaltevorrichtung mit den Merkmalen des Anspruchs 1 vorgeschlagen.

Die erfindungsgemäße Anordnung der ersten Abströmöffnung führt dazu, daß sie von großen Insassen verdeckt wird, so daß ein vergleichsweise hoher Innendruck resultiert, während sie bei kleinen Insassen freiliegt, so daß sich ein vergleichsweise niedriger Innendruck ergibt. Die erste Abströmöffnung ermöglicht somit eine individuelle Abstimmung der Rückhaltewirkung auf den Körperbau des Insassen. Für eine erste Abströmöffnung, die in einem Bereich liegt, der sich bezogen auf das Hüftgelenk des Insassen zwischen einer Höhe von 400 mm und einer Höhe von 550 mm erstreckt, ergeben sich dabei optimale Testergebisse.

Gemäß der Erfindung weist der Gassack eine zweite Abströmöffnung auf, die in einem dem Insassen nicht zugewandten Bereich des unteren Abschnitts des Gassacks angeordnet ist. Diese in jedem Fall freiliegende zweite Abströmöffnung sorgt dafür, daß sich die Gassackform und der Gassackinnendruck auch an den Körperbau von großen Insassen individuell anpassen können.

Damit das aus der ersten Abströmöffnung austretende Gas nicht direkt auf den Insassen trifft, ist es an der ersten Abströmöffnung eine Einrichtung zum Ablenken des abströmenden Gases vorgesehen.

Gemäß der bevorzugten Ausführungsform der Erfindung weist der Gassack im aufgeblasenen Zustand, in Fahrzeuglängsrichtung betrachtet, einen oberen Abschnitt und einen gegenüber dem oberen Abschnitt verbreiterten unteren Abschnitt auf, wobei sich der untere Abschnitt ausschließlich oberhalb des Hüftgelenks des Insassen erstreckt. Die verbreiterte Ausgestaltung des unteren Gassackabschnitts sorgt insbesondere bei Insassen mit schmalem Oberkörper dafür, daß der Spalt zwischen Türverkleidung und Oberkörper schnellstmöglich geschlossen wird. Dementsprechend beginnt die Rückhaltewirkung bei solchen Insassen früher und gestaltet sich dadurch effektiver. Auch bei großen Insassen kann im Falle eines großen Abstands zwischen Sitzlehne und Türverkleidung die Rückhaltewirkung gegenüber herkömmlichen kissenförmigen Gassäcken verbessert werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 einen Fahrzeugsitz neben einer Seitenstruktur eines Fahrzeugs mit einem aufgeblasenen Gassack einer erfindungsgemäßen Seitenaufprallrückhaltevorrichtung in Fahrzeuglängsrichtung betrachtet;
- Figuren 2a und 2b die Darstellung aus Figur 1 mit einem kleinen bzw. mit einem großen Fahrzeuginsassen;
- Figuren 3a und 3b Schnittansichten entlang der Linien A-A bzw. B-B aus den Figuren 2a und 2b;
- Figuren 4a und 4b die Darstellungen aus den Figuren 2a bzw. 2b in Seitenansicht;
- Figur 5 eine überlagerte Darstellung eines kleinen und eines großen sitzenden Insassen in Seitenansicht;
- Figur 6a eine Draufsicht auf den Gassack im Bereich der ersten Abströmöffnung;
- Figuren 6b und 6c Schnittansichten entlang der Linien C-C bzw. D-D aus Figur 6a.

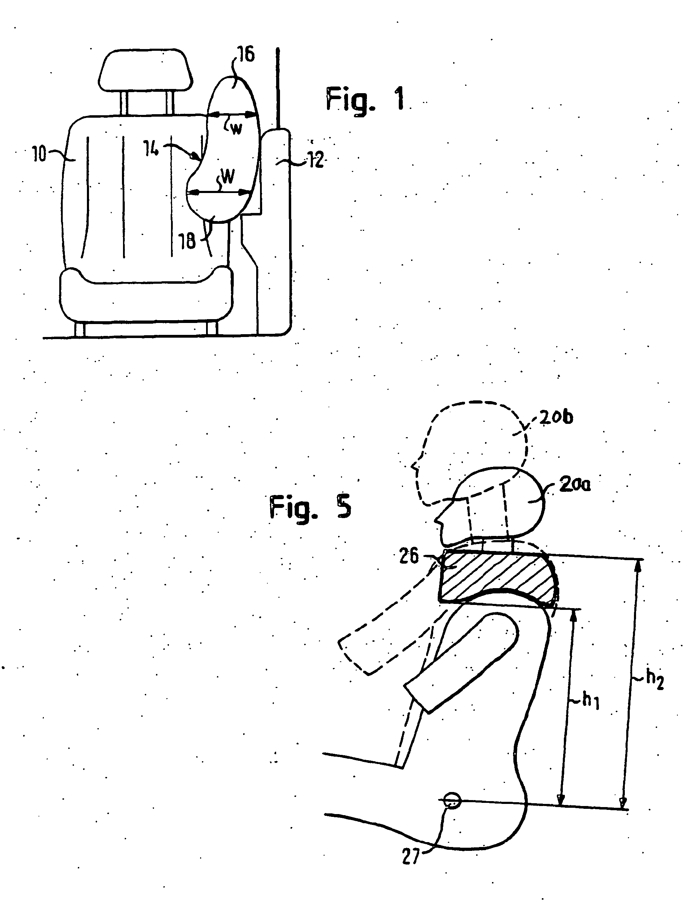

In Figur 1 ist ein Teil eines Fahrzeuginnenraums mit einem Vordersitz 10 und einer Seitenstruktur 12 des Fahrzeugs dargestellt. Der Abstand zwischen der Lehne des Sitzes 10 und der Seitenstruktur 12 (Türverkleidung bzw. B-Säule) variiert in der Regel zwischen 60 und 140 mm. Weiterhin ist ein Gassack 14 zum Schutz eines Fahrzeuginsassen vor einem Seitenaufprall im aufgeblasenen Zustand gezeigt, der sich aus der Sitzlehne 10 heraus entfaltet hat. Der Gassack 14 weist einen oberen Abschnitt 16 und einen unteren Abschnitt 18 auf, wobei die Breite W des unteren Abschnitts 18 die Breite w des oberen Abschnitts 16 übersteigt.

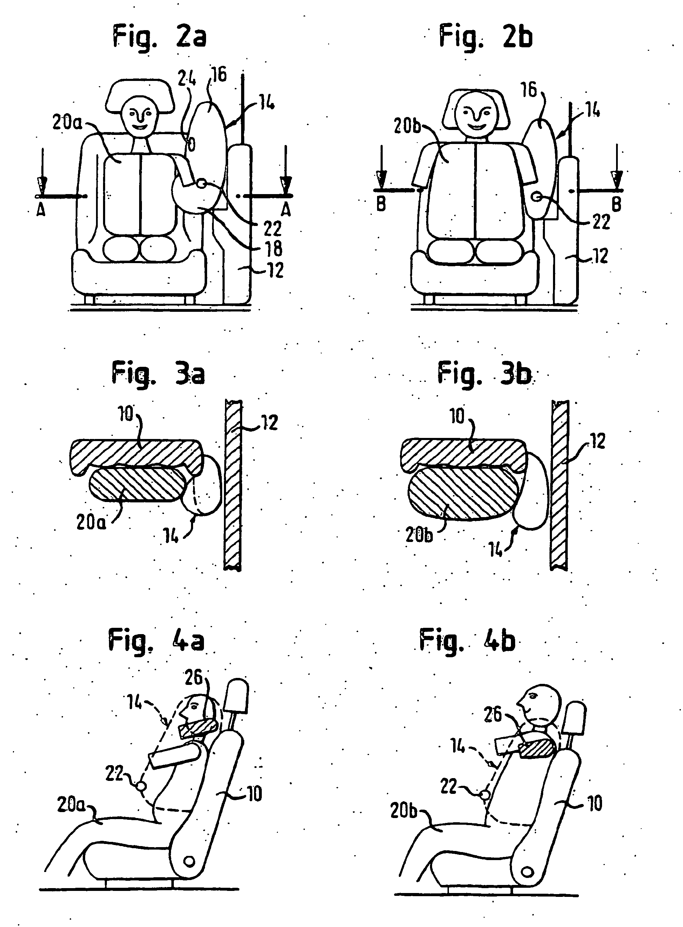

In den Figuren 2a und 2b wird unterschieden zwischen einem kleinen Insassen 20a mit schmalem Oberkörper und einem großen Insassen 20b mit breitem Oberköper. Es ist zu erkennen, daß sich der untere Abschnitt 18 des Gassacks 14 unabhängig von der Größe des Insassen auf Höhe des Thoraxbereichs erstreckt. Aufgrund der verbreiterten Ausführung des unteren Abschnitts 18 wird beim Entfalten des Gassacks 14, insbesondere bei kleinen Insassen 20a mit schmalem Oberkörper, der relativ große Spalt zwischen Oberkörper und Seitenstruktur 12 schnell geschlossen.

Der Gassack 14 weist ferner eine erste Abströmöffnung 24 und eine zweite Abströmöffnung 22 auf (siehe Figur 2a). Die zweite Abströmöffnung 22 ist in einem dem Insassen nicht zugewandten Bereich des Gassacks 14, genauer gesagt im vorderen Bereich des unteren Abschnitts 18 angeordnet. Die erste Abströmöffnung 24 ist in einem dem Fahrzeuginsassen zugewandten Bereich des oberen Abschnitts 16 des Gassacks 14 vorgesehen.

Die vertikale Position der ersten Abströmöffnung 24 liegt in einem Bereich 26, der in den Figuren 4a, 4b und 5 schraffiert dargestellt ist. Dieser Bereich 26 liegt, bezogen auf das Hüftgelenk 27 eines Insassen 20a oder 20b, zwischen einer Höhe h₁ von 400 mm und einer Höhe h₂ von 550 mm.

Aus den Figuren 4a und 4b ist ferner zu ersehen, daß aus der zweiten Abströmöffnung 22 unabhängig von der Größe des Insassen immer Gas abströmen kann. Dagegen wird die erste Abströmöffnung 24 von großen Insassen 20b abgedeckt, während sie bei kleinen Insassen 20a zunächst frei bleibt.

Die zweite Abströmöffnung 22 dient zur Einstellung des Gassackinnendrucks speziell für große Insassen 20b mit breitem Oberkörper. Die Möglichkeit des Gasaustritts aus der zweiten Abströmöffnung 22 erlaubt es, daß ein Teil des verbreiterten unteren Abschnitts 18 des Gassacks 14 verdrängt werden kann (siehe Figuren 2b und 3b). Es hat sich herausgestellt, daß für solche Insassen ein dynamischer Gassackinnendruck von ca. 0,6 bis 0,8 bar optimal ist. Bei kleinen Insassen 20a mit schmalem Oberkörper erlangt der Gassack 14 im wesentlichen seine volle Ausdehnung (siehe Figuren 2a und 3a). Da die erste Abströmöffnung 24 von einem kleinen Insassen 20a nicht abgedeckt wird, addieren sich in diesem Fall die Flächen der beiden Abströmöffnungen 22 und 24. Durch das Abströmen von Gas aus beiden Abströmöffnungen 22 und 24 resultiert ein für kleine Insassen 20a optimaler dynamischer Gassackinnendruck von ca. 0,3 bis 0,4 bar. Der Gassackinnendruck kann also über die Abströmöffnungen 22 und 24 in Abhängigkeit von der Größe des Insassen gesteuert werden.

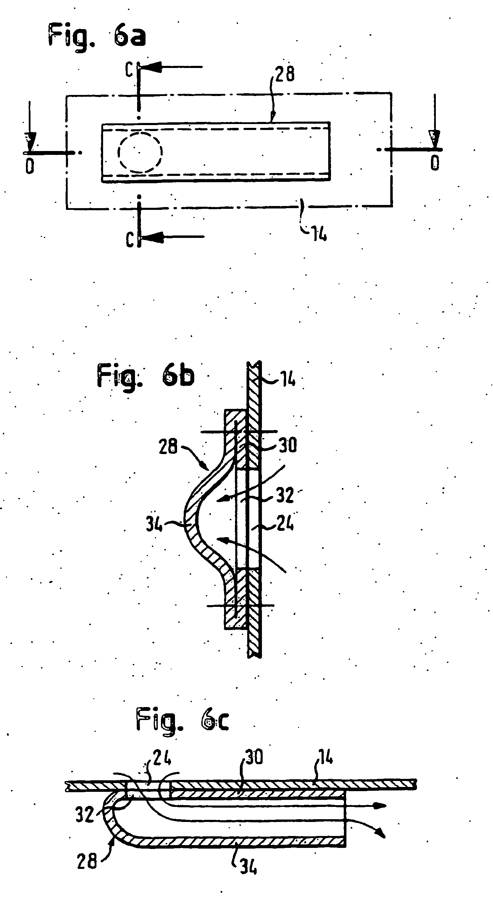

Zum Schutz des Insassen vor dem aus der ersten, dem Insassen zugewandten Abströmöffnung 24 austretenden Gas ist eine in den Figuren 6a bis 6c gezeigte Ablenkeinrichtung vorgesehen, die wenigstens teilweise in dem Bereich 26 liegt und aus einem Gewebestück 28 gebildet ist. Ein erster Abschnitt 30 des Gewebestücks 28 liegt direkt über der ersten Abströmöffnung 24 und weist eine der ersten Abströmöffnung 24 entsprechende Öffnung 32 auf. Ein mit dem ersten Abschnitt 30 verbundener zweiter Abschnitt 34 ist so umgelegt, daß er die beiden Öffnungen 24 und 32 überdeckt. Die Gewebelagen 30 und 34 sind an zwei entgegengesetzten Seiten auf die Außenwand des Gassacks 14 aufgenäht, so daß das Gas nur zu einer Seite austreten kann (siehe Figur 6c). Diese Seite ist so gewählt, daß sie vom Insassen weg weist.

## Patentansprüche

1. Seitenaufprall-Rückhaltevorrichtung zum Schutz eines auf einem Fahrzeugsitz (10) sitzenden Insassen (20a; 20b) in einem Kraftfahrzeug,
mit einem Gassack (14), der sich zwischen einer Seitenstruktur (12) des Fahrzeugs und dem Insassen (20a; 20b) entfaltet,
wobei der Gassack (14) eine erste Abströmöffnung (24) aufweist, die in einem dem Insassen (20a; 20b) zugewandten Bereich des Gassacks (14) angeordnet ist und deren vertikale Position in einem Bereich (26) liegt, der sich bezogen auf das Hüftgelenk (27) des Insassen (20a; 20b) zwischen einer Höhe (h₁) von 400 mm und einer Höhe (h₂) von 550 mm erstreckt, so daß die erste Abströmöffnung (24) vom Oberkörper eines kleinen Insassen (20a) nicht abgedeckt wird, aber von einem großen Insassen (20b) verdeckt wird,
wobei sich der Gassack (18) aus dem Fahrzeugsitz (10) heraus entfaltet,
wobei der Gassack (14) eine zweite Abströmöffnung (22) aufweist, die in einem dem Insassen (20a; 20b) nicht zugewandten Bereich des Gassacks (14) angeordnet ist,
wobei mittels der Abströmöffnungen (22, 24) durch das Abströmen von Gas der Gassackinnendruck in Abhängigkeit von der Größe des Insassen (20a; 20b) gesteuert wird, und
wobei an der ersten Abströmöffnung (24) eine Einrichtung zum Ablenken des abströmenden Gases vorgesehen ist, die ein auf der Außenseite des Gassacks (14) über der ersten Abströmöffnung (24) angeordnetes Gewebestück (28) umfaßt,
**dadurch gekennzeichnet, daß** die zweite Abströmöffnung (22) in einem dem Insassen (20a; 20b) nicht zugewandten Bereich des unteren Abschnitts (18) des Gassacks (14) angeordnet ist, und daß
das Gewebestück (28) einen direkt über der ersten Abströmöffnung (24) liegenden ersten Gewebeabschnitt (30) mit einer der ersten Abströmöffnung (24) entsprechenden Öffnung (32) und einen die erste Abströmöffnung (24) und die im ersten Gewebeabschnitt (30) gebildete Öffnung (32) abdeckenden zweiten Gewebeabschnitt (34) aufweist, wobei der zweite Gewebeabschnitt (34) so am ersten Gewebeabschnitt (30) befestigt ist, daß das durch die erste Abströmöffnung (24) austretende Gas nur zu einer dem Insassen (20a; 20b) abgewandten Seite entweichen kann.

2. Seitenaufprall-Rückhaltevorrichtung nach Anspruch 1, **dadurch gekennzeichnet, daß** der Gassack (14) im aufgeblasenen Zustand, in Fahrzeuglängsrichtung betrachtet, einen oberen Abschnitt (16) und einen gegenüber dem oberen Abschnitt (16) verbreiterten unteren Abschnitt (18) aufweist, wobei sich der untere Abschnitt (18) ausschließlich oberhalb des Hüftgelenks (27) des Insassen (20a; 20b) erstreckt.

## Claims

1. A side impact restraint device for protection of an occupant (20a; 20b) sitting on a vehicle seat (10) in a motor vehicle,
comprising a gas bag (14) which unfolds between a lateral structure (12) of the vehicle and the occupant (20a; 20b),
the gas bag (14) having a first outflow opening (24) which is arranged in a region of the gas bag (14) facing the occupant (20a; 20b) and the vertical position of which is located in a region (26) which in relation to the hip joint (27) of the occupant (20a; 20b) extends between a height (h₁) of 400 mm and a height (h₂) of 550 mm, so that the first outflow opening (24) is not covered by the upper part of the body of a small occupant (20a), but is covered by a tall occupant (20b),
the gas bag (14) unfolding out from the vehicle seat (10),
the gas bag (14) having a second outflow opening (22) which is arranged in a region, not facing the occupant (20a; 20b), of the gas bag (14),
the internal pressure of the gas bag being controlled by means of the outflow openings (22, 24) as a function of the height of the occupant (20a; 20b) by gas flowing out, and
an arrangement for deflecting the outflowing gas being provided at the first outflow opening (24), the arrangement comprising a fabric piece (28) arranged on the outer side of the gas bag (14) over the first outflow opening (24),
**characterized in that** the second outflow opening (22) is arranged in a region, not facing the occupant (20a; 20b), of the lower section (18) of the gas bag (14), and **in that**
the fabric piece (28) includes a first fabric section (30) located directly over the first outflow opening (24) and having an opening (32) corresponding to the first outflow opening (24), and a second fabric section (34) covering the first outflow opening (24) and the opening (32) formed in the first fabric section (30), the second fabric section (34) being fastened to the first fabric section (30) such that the gas emerging through the first outflow opening (24) can only escape on a side facing away from the occupant (20a; 20b).

2. The side impact restraint device according to Claim 1, **characterized in that** the gas bag (14) in the inflated state, as viewed in the longitudinal direction of the vehicle, has an upper section (16) and a lower section (18) widened compared with the upper section (16), the lower section (18) extending solely above the hip joint (27) of the occupant (20a; 20b).

## Revendications

1. Dispositif de retenue d'impact latéral pour protéger un occupant (20a ;
20b) assis sur un siège de véhicule (10) dans un véhicule automobile,
comportant un coussin à gaz (14) qui se déploie entre une structure latérale (12) du véhicule et l'occupant (20a ; 20b),
le coussin à gaz (14) présentant un premier orifice d'écoulement (24) qui est agencé dans une région du coussin à gaz (14) tournée vers l'occupant (20a ; 20b) et dont la position verticale se trouve dans une région (26) qui, par rapport à l'articulation de la hanche (27) de l'occupant (20a ; 20b), s'étend entre une hauteur (h₁) de 400 mm et une hauteur (h₂) de 550 mm, de sorte que le premier orifice d'écoulement (24) n'est pas recouvert par le torse d'un occupant (20a) de petite taille, mais est recouvert par un occupant (20b) de grande taille,
le coussin à gaz (14) se déployant hors du siège de véhicule (10),
le coussin à gaz (14) présentant un deuxième orifice d'écoulement (22) qui est agencé dans une région qui n'est pas tournée vers l'occupant (20a ; 20b) du coussin à gaz (14),
la pression interne du coussin à gaz étant commandée au moyen des orifices d'écoulement (22, 24) par l'écoulement de gaz en fonction de la taille de l'occupant (20a ; 20b), et
un dispositif de déviation du gaz s'échappant étant prévu au niveau du premier orifice d'écoulement (24), lequel comprend une pièce de tissu (28) agencée sur la face extérieure du coussin à gaz (14) au-dessus du premier orifice d'écoulement (24),
caractérisé en ce le deuxième orifice d'écoulement (22) est agencé dans une région, qui n'est pas tournée vers l'occupant (20a ; 20b), du tronçon inférieur (18) du coussin à gaz (14), et en ce que
la pièce de tissu (28) présente un premier tronçon de tissu (30) situé directement au-dessus du premier orifice d'écoulement (24) avec un orifice (32) correspondant au premier orifice d'écoulement (24), et un deuxième tronçon de tissu (34) recouvrant le premier orifice d'écoulement (24) et l'orifice (32) formé dans le premier tronçon de tissu (30), le deuxième tronçon de tissu (34) étant fixé sur le premier tronçon de tissu (30) de telle sorte que le gaz sortant à travers le premier orifice d'écoulement (24) ne peut s'échapper que vers un côté détourné de l'occupant (20a ; 20b).

2. Dispositif de retenue d'impact latéral selon la revendication 1, **caractérisé en ce que** le coussin à gaz (14) à l'état gonflé et vu en direction longitudinale du véhicule, présente un tronçon supérieur (16) et un tronçon inférieur (18) élargi par rapport au tronçon supérieur (16), le tronçon inférieur (18) s'étendant uniquement au-dessus de l'articulation de la hanche (27) de l'occupant (20a ; 20b).
